Europäisches Patentamt

European Patent Office

Office européen des brevets

(19)

(11) **EP 1 568 484 A1**

(12) **EUROPEAN PATENT APPLICATION**

(43) Date of publication:
**31.08.2005 Bulletin 2005/35**

(51) Int Cl.⁷: **B32B 1/08**, F16L 11/08, F16L 11/04

(21) Application number: **05251066.6**

(22) Date of filing: **23.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **24.02.2004 JP 2004048211**

(71) Applicant: **TOKAI RUBBER INDUSTRIES, LTD.**
**Aichi-ken, 485-8550 (JP)**

(72) Inventor: **Shinohara, Hideki**
**Komaki-shi Aichi-ken, 485-8550 (JP)**

(74) Representative: **Wakerley, Helen Rachael**
**Reddie & Grose,**
**16 Theobalds Road**
**London WC1X 8PL (GB)**

(54) **Heat-resistant hose**

(57)     A heat-resistant hose capable of exhibiting excellent interlaminar adhesion in a high-temperature environment. The heat-resistant hose has a laminar structure of an inner layer formed by fluorine-containing rubber (a fluorine-containing rubber layer 1) and an acrylic rubber layer 2 formed on an outer peripheral surface of the fluorine-containing rubber layer 1, wherein the acrylic rubber layer 2 is formed by a rubber composition comprising the following (A) to (D):

(A) an acrylic elastomer;
(B) a peroxide crosslinking agent;
(C) phenothiazine; and
(D) an acid receiver.

F i g. 1

EP 1 568 484 A1

**Description**

**BACKGROUND OF THE INVENTION**

**Field of the Invention**

The present invention relates to a heat-resistant hose, in particular, to a heat-resistant hose effective for use as a fuel hose and the like of new diesel engines (in accordance with controlling of diesel emissions from automobiles).

**Description of the Art**

Recently, a demand has been increased for heat-resistance hoses suitable for such applications as use with new diesel engines, diesel particulate filter (DPF) systems and the like in practical use, because of the tightening of regulations controlling diesel emissions from automobiles.

Heretofore, acrylic rubber, superior in heat-resistance, has been used for forming heat-resistance hoses for use as fuel hoses in automobiles. Alternatively, a laminar structure of fluorine rubber and hydrin rubber has been formed for the heat-resistance hose. However, such acrylic rubber hoses or laminar-structure hoses of fluorine rubber and hydrin rubber have limitations for use in new diesel engines. Since the control system is programmed to ignite effectively with minimum fuel in the new diesel engines, the fuel is ejected at a higher temperature and a higher pressure than encountered with conventional automotive fuel hoses. For this reason, higher heat-resistance and higher durability are required as compared with the conventional automotive fuel hoses. The objective is durability such that the fuel hose can endure usage of not less than 1000 hours at 160°C.

Further, acrylic rubber hoses or laminar-structure hoses of fluorine rubber and hydrin rubber have limitations also for use in the DPF system for use in eliminating PM (Particulate Matter) from automotive emissions. Higher heat-resistance and higher durability are also required for the automotive hoses of the DPF system as compared with the conventional automotive fuel hoses. In addition, acid components of automotive emissions condense on an inner peripheral surface of the hose and liquefy thereon. Therefore, acrylic rubber hoses, inferior in acid resistance, and laminar-structure hoses of fluorine rubber and hydrin rubber, inferior in heat resistance, tend to cause problems in terms of product reliability.

For this reason, a heat resistant hose provided with an additional fluorine rubber (FKM) layer formed on an inner peripheral surface of the acrylic rubber hose has been studied for solving the above mentioned problem. It is very important for such a hose to sustain interlaminar adhesion strongly in terms of practical use. Bonding the acrylic rubber layer to the FKM layer strongly without use of adhesive (adhesive-less), is, for example, by selecting amine-vulcanized acrylic rubber as a material for forming the acrylic rubber layer. When using the amine-vulcanized acrylic rubber, amine of the rubber also co-crosslinks with FKM, resulting in strong adhesion between the amine-vulcanized acrylic rubber layer and the FKM rubber layer. Alternatively, another bonding method is, for example, to add hydroxyl-terminated liquid polybutadiene and a metal compound to at least one of materials for forming the acrylic rubber layer and the FKM layer (see, for example, Japanese Unexamined Patent Publication No. 6-79328).

However, in the hose having such a laminar structure of an acrylic rubber layer formed by using the above-mentioned amine-vulcanized acrylic rubber and a FKM layer, there is the problem that cracking tends to occur on the FKM side of the adhesive interface after thermal aging. It is thought that the amine vulcanizing agent residue of the acrylic rubber may deteriorate FKM (amine-related deterioration), when the hose is exposed to a high-temperature environment, so that the FKM side near to the adhesive interface of the both layers becomes a weak and degraded FKM layer, and thus cracking may occur. On the other hand, although the hose having such a laminar structure, as shown in the above-mentioned Patent Publication, exhibits an excellent initial interlaminar adhesion, the interlaminar adhesion may be deteriorated with use in a high-temperature environment because the liquid polybutadiene of the acrylic rubber layer or the FKM layer is inferior in heat resistance. Further, since the liquid polybutadiene may deteriorate heat resistance, inherent to acrylic rubber, improvements are required here.

In view of the foregoing, it is an object of the present invention to provide a heat-resistant hose capable of exhibiting excellent interlaminar adhesion in high-temperature environments.

**SUMMARY OF THE INVENTION**

In accordance with the present invention to achieve the object described above, there is provided a heat-resistant hose having a laminar structure of an inner layer formed by fluorine-containing rubber and an acrylic rubber layer formed on an outer peripheral surface of the inner layer, wherein the acrylic rubber layer is formed by a rubber composition comprising the following components (A) to (D):

(A) an acrylic elastomer;
(B) a peroxide crosslinking agent;
(C) phenothiazine; and
(D) an acid receiver.

The inventors of the present invention have conducted intensive studies for solving the above-mentioned problems. During their studies, they considered that the acrylic rubber layer formed and laminated on the FKM layer was formed by crosslinking with a peroxide (peroxide crosslinking) for co-crosslinking both layers. It was expected from such a crosslinking that amine-related deterioration of the FKM layer might be prevented and further heat resistance of the entire hose could be improved. On the other hand, however, the following problem, for example, became apparent. The crosslinking rate for crosslinking acrylic rubber by using a peroxide crosslinking agent is too fast as compared with that for FKM, so that co-crosslinking between both layers may not be strongly achieved. Further, when vulcanizing the FKM layer, a large amount of gas such as moisture and hydrofluoric acid generates and accumulates (or foams) at the adhesive interface, which inhibits interlaminar adhesion. For this reason, as a result of further studies for solving these problems, the inventors selected phenothiazine as an adjuster for retarding the crosslinking rate without deteriorating radical crosslinking (peroxide crosslinking) for acrylic rubber. They added phenothiazine to a material for forming the acrylic rubber layer and also added an acid receiver thereto for restricting foaming on the adhesive interface by absorbing gas generated from FKM. As a result, a laminar-structure rubber hose, obtained by peroxide co-crosslinking, excellent in heat resistance could be obtained without the above-mentioned problems. Thus, the inventors attained the present invention.

As described above, the heat-resistant hose of the present invention has a laminar structure of an inner layer formed by fluorine-containing rubber and an acrylic rubber layer formed on an outer peripheral surface of the inner layer, the acrylic rubber layer being formed by an acrylic rubber composition including a peroxide crosslinking agent, phenothiazine and an acid receiver. For this reason, the heat-resistant hose of the present invention is excellent in heat resistance due to properties of both the above-mentioned two layers, and has sufficient adhesion therebetween in a high-temperature environment, and also has excellent durability, resulting in extremely excellent reliability in terms of quality. The heat-resistant hose of the present invention is capable of exhibiting excellent performance as fuel hoses for new diesel engines or the DPF hoses, which especially require higher heat-resistance and higher pressure-resistance.

Especially, when the acid receiver of the acrylic rubber composition is one selected from the group consisting of metal oxides, metal hydroxides and hydrotalcite compounds, the interlaminar adhesion between the acrylic rubber layer and the fluorine-containing rubber layer can be further improved because such an acid receiver is excellent in absorbing gas generated by FKM.

**BRIEF DESCRIPTION OF THE DRAWING**

Fig. 1 is a schematic diagram illustrating the construction of an embodiment of a heat-resistant hose according to the present invention;
Fig. 2 is a schematic diagram illustrating an another embodiment of a heat-resistant hose according to the present invention; and
Fig. 3 is a schematic diagram illustrating a still further embodiment of a heat-resistant hose according to the present invention

**DESCRIPTION OF THE PREFERRED EMBODIMENTS**

Embodiments of the present invention will hereinafter be described in detail.

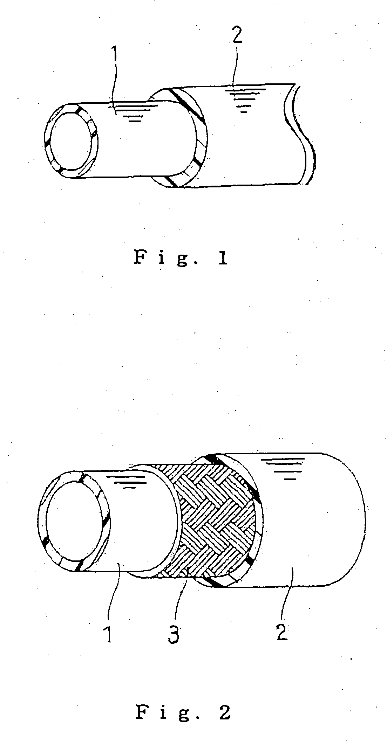

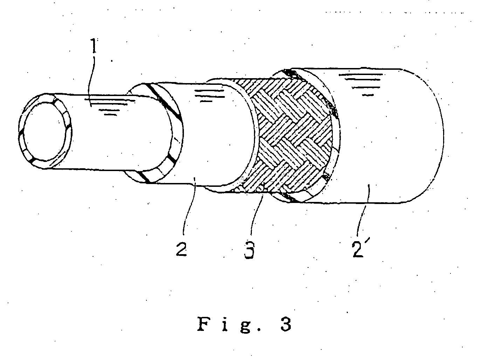

A heat-resistant hose according to the present invention has a structure, for example, as shown in Fig. 1, of a fluorine-containing rubber layer 1 as an innermost layer and an acrylic rubber layer 2 formed directly on an outer peripheral surface of the fluorine-containing rubber layer 1 by using an acrylic rubber composition including a specific component. Further, the heat-resistant hose of the present invention may have a structure, as shown in Fig. 2, of a fluorine-containing rubber layer 1 as an innermost layer, a reinforcing fiber layer 3 formed on an outer peripheral surface of the fluorine-containing rubber layer 1, and an acrylic rubber layer 2 further formed on an outer peripheral surface of the reinforcing fiber layer 3. Because the fluorine-containing rubber layer 1 contacts the acrylic rubber layer 2 through the texture of the reinforcing fiber layer 3, sufficient adhesion between the fluorine-containing rubber layer 1 and the acrylic rubber layer 2, one of characteristic features of the present invention, can be realized, even in the structure as shown in Fig. 2. Further, the heat-resistant hose of the present invention may have a structure, as shown in Fig. 3, such that a reinforcing fiber layer 3 is formed on an outer peripheral surface of the heat-resistance hose, as shown in Fig. 1, and an acrylic rubber layer 2' is further formed on an outer peripheral surface of the reinforcing fiber layer 3.

The material for forming the fluorine-containing rubber layer 1 is not specifically limited. Examples thereof include a vinylidene fluoride-trifluorochloroethylene copolymer, a vinylidene fluoride-hexafluoropropylene copolymer, a vinylidene fluoride-hexafluoropropylene-tetrafluoroethylene terpolymer, a tetrafluoroethylene-propylene copolymer, a vinylidene fluoride-tetrafluoroethylene-propylene terpolymer, a blend of polyvinylidene fluoride and acrylic rubber. These may be used either alone or in combination thereof. A vinylidene fluoride-hexafluoropropylene- tetrafluoroethylene terpolymer is most preferred, from a viewpoint of high resistance to alcohol-containing fuel. Further, a crosslinking agent such as polyamine, peroxide and polyol may appropriately be added to the material for forming the fluorine-containing rubber layer 1. The crosslinking agent may generally be blended in a fluorine-containing rubber composition in an appropriate amount. A peroxide crosslinking agent is preferably used, because heat resistance is improved, and the crosslinking agent is then the same as that of the acrylic rubber layer 2 (a peroxide crosslinking agent) so that interlaminar adhesion becomes better.

The materials for forming the fluorine-containing rubber layer 1 of the heat-resistant hose of the present invention may include any of a filler, such as carbon black, an acid receiver, such as magnesium oxide, and a plasticizer, such as dibutyl sebacate (DBS), as required.

For the materials for forming the acrylic rubber layer 2 on an outer peripheral surface of the fluorine-containing rubber layer 1, an acrylic elastomer (component (A)), a peroxide crosslinking agent (component (B)), phenothiazine (component (C)) and an acid receiver (component (D)) are used as essential components.

The acrylic elastomer (component (A)) is not specifically limited, however, it is preferred that the acrylic ester is present at 70 to 100% by weight, ethylene is present at 0 to 10% by weight and vinyl acetate is present at 0 to 20% by weight, respectively, within the acrylic elastomer. This gives a resultant heat-resistance hose with excellent properties. Examples of the acrylic esters include acrylic alkoxy acryl such as methyl acrylate, ethyl acrylate, n-butyl acrylate and methoxyethyl acrylate. Further, a crosslinkable monomer may be copolymerized at 0 to 5% by weight in the copolymerization of the above-mentioned materials. Examples of the crosslinkable monomers include monomers having an active halogen group, an epoxy group, a carboxyl group, a hydroxyl group, an amido group and a diene group. Those having an epoxy group, such as glycidyl methacrylate, and/or a carboxyl group, such as monobutyl malate are preferred.

Examples of commercially available acrylic elastomer (component (A)) include Nipol AR available from ZEON CORPORATION of Tokyo, Japan, NOXTITE available from UNIMATEC CO., LTD. of Tokyo, Japan, DENKA ER available from DENKI KAGAKU KOGYO KABUSHIKI KAISHA of Tokyo, Japan and VAMAC available from Du Pont Kabushiki Kaisha of Tokyo, Japan. These are preferably used.

Examples of the peroxide crosslinking agent (component (B)) used together with the component (A) include: peroxy ketals such as 1,1-bis(t-butylperoxy)-3,3,5-trimethyl cyclohexane, 1,1-bis(t-hexylperoxy)-3,3,5-trimethyl cyclohexane, 1,1-bis (t-hexylperoxy)cyclohexane, 1,1-bis(t-butylperoxy)cyclododecane, 1,1-bis(t-butylperoxy) cyclohexane, 2,2-bis(t-butylperoxy)octane, n-butyl-4,4-bis(t-butylperoxy)butane and n-butyl-4,4-bis(t-butylperoxy)valerate; dialkyl peroxides such as di-t-butylperoxide, dicumyl peroxide, t-butyl cumylperoxide, $\alpha,\alpha'$-bis(t-butylperoxy-m-isopropyl) benzene, $\alpha,\alpha'$-bis (t-butylperoxy)diisopropylbenzene, 2,5-dimetyl-2,5-di(t-butylperoxy)hexane and 2,5-dimetyl-2,5-bis (t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichloro-benzoyl peroxide and m-toluoylperoxide; peroxy esters such as t-butylperoxy acetate, t-butylperoxy isobutylate, t-butylperoxy-2-ethylhexanoate, t-butylperoxylaurylate, t-butyl peroxybenzoate, di-t-butyl peroxyisophthalate, 2,5-dimethyl-2,5-di(benzoylperoxy) hexane, t-butylperoxy maleic acid, t-butylperoxy isopropylcarbonate and cumylperoayoctate; and hydro peroxides such as t-butylhydroperoxide, cumene hydroperoxide, diisopropylbenzene hydroperoxide, 2,5-dimethylhexane-2,5-dihydroperoxide and 1,1,3,3-tetramethylbutylperoxide. They may be used either alone or in combination.

The peroxide crosslinking agent (component (B)) is preferably present in a proportion of 1 to 10 parts by weight (hereinafter just abbreviated to "parts"), more preferably 1 to 5 parts, based on 100 parts of the acrylic elastomer (component (A)). If the proportion of the component (B) is smaller than 1 part, the resulting hose tends to have a low strength because of insufficient crosslinking. If the proportion of the component (B) is greater than 10 parts, the resulting hose tends to have a poor flexibility with high hardness.

The acrylic rubber composition contains phenothiazine (component(C)) as one of essential components together with the above components (A) and (B). The addition of the phenothiazine improves anti-scorching property, affected by peroxide crosslinking for the acrylic rubber, so that moldability and interlaminar adhesion with the fluorine-containing rubber layer 1 by crosslinking are even better.

The phenothiazine (component (C)) is preferably present in a proportion of 0.1 to 5 parts, more preferably 0.1to 2 parts, based on 100 parts of the acrylic elastomer (component (A)). If the proportion of the component (C) is within this range, interlaminar adhesion and anti-scorching property are improved so as to satisfy requirements for the present invention.

The acid receiver (component (D)), used together with the above components (A) to (C), is not specifically limited as long as it has capability of absorbing acid gas such as hydrofluoric acid. However, metal oxides, metal hydroxides and hydrotalcite compounds are preferred in terms of excellent gas-absorbing capability. For this reason, when using such an acid receiver, the interlaminar adhesion between the acrylic rubber layer 1 and the fluorine-containing rubber layer 2 is further improved. Examples of the metal oxides may include a magnesium oxide, a calcium oxide and a zinc oxide. Examples of the metal hydroxides may include a calcium hydroxide. Examples of the hydrotalcite compounds may include a hydrotalcite compound having a composition formula of $Mg_{4.5}Al(OH)_{13}(CO_3 \cdot 3.5H_2O$. They may be used either alone or in combination.

The acid receiver (component (D)) is preferably present in a proportion of 1 to 20 parts, more preferably 3 to 10 parts, based on 100 parts of the acrylic elastomer (component (A)). If the proportion of the component (D) is smaller than 1 parts, the capability for absorbing gas such as hydrofluoric acid is insufficient and thus it is difficult to provide sufficient interlaminar adhesion. If the proportion of the component (D) is greater than 20 parts, the ccmpression set may be deteriorated.

The materials for forming the acrylic rubber layer 2 of the heat-resistant hose of the present invention may further include any of carbon black, a co-crosslinking agent, a reinforcing agent, a white filler, a plasticizer, a vulcanizing agent, a vulcanizing accelerator, a process aid, an antioxidant, a flame retardant or the like, as required.

Examples of the reinforcing fiber for forming the reinforcing fiber layer 3 between the acrylic rubber layer 2 and the fluorine-containing rubber layer 1, as shown in Fig. 2 (or between the acrylic rubber layer 2 and another acrylic rubber layer 2' in Fig. 3) include, for example, a vinylon (polyvinyl alcohol) fiber, a polyamide (nylon) fiber, an aramid fiber and polyethylene terephthalate (PET) fiber.

The method for weaving the above-mentioned reinforcing fibers is not specifically limited, however, examples thereof include spiralling, knitting and braiding.

The heat-resistant hose of the present invention, as shown in Fig. 1, is produced, for example, as follows. First of all, a composition for forming the fluorine-containing rubber layer 1 is prepared. Then, each material for forming the above components (A) to (D), and other components, as required, are prepared and kneaded by means of a kneading machine such as a roll mill, a kneader or a Banbury mixer for preparation of the composition for forming the acrylic rubber layer 2. After molding the composition for forming the fluorine-containing rubber layer 1 into a cylindrical shape, the composition for forming the acrylic rubber layer 2 is molded directly onto a peripheral surface of the thus molded fluorine-containing rubber layer 1 without applying adhesive thereto (adhesive-less). The resulting mold is vulcanized. Thus, the heat-resistant hose of the present invention, having the fluorine-containing rubber layer 1 and the acrylic rubber layer 2 formed on an outer peripheral surface of the fluorine-containing rubber layer 1, is formed. Alternatively, the heat-resistant hose of the present invention may be produced by co-extruding each layer material.

The heat-resistant hose of the present invention, as shown in Fig. 2, is produced, for example, as follows. The materials for forming each layer are prepared in the same manner as above. After extruding the composition for forming the fluorine-containing rubber layer 1 into a cylindrical shape, reinforcing fibers are braided onto an outer peripheral surface of the thus extruded fluorine-containing rubber layer 1. Then, the composition for forming the acrylic rubber layer 2 is extruded onto an outer peripheral surface of the reinforcing fibers and each layer is vulcanized. Thus, the heat-resistant hose of the present invention, having the fluorine-containing rubber layer 1, the reinforcing fiber layer 3 formed on an outer peripheral surface of the fluorine-containing rubber layer 1, and the acrylic rubber layer 2 formed on an outer peripheral surface of the reinforcing fiber layer 3, is formed.

In the structures, as shown in Figs. 1 to 3, the acrylic rubber layer 2 (or 2') becomes the outermost layer. For this reason, when forming the heat-resistance hose of the present invention as a curved hose, there is the advantage that flaws or marks caused by handling when inserting an unvulcanized hose into a curved mandrel may hardly remain on the outer peripheral surface of the hose. However, the heat-resistant hose of the present invention is not limited to the structures, as shown in Figs. 1, 2 and 3, and may, for example, have the structure that a reinforcing layer is formed on an outer peripheral surface of the acrylic rubber layer 2 (or 2').

The thus produced heat-resistant hose may generally have an internal diameter of 2 to 100mm, particularly preferably 3 to 70mm. The fluorine-containing rubber layer 1 may have a thickness of 0.1 to 10mm, particularly preferably 0.3 to 3mm. The acrylic rubber layer 2 may have a thickness of 0.3 to 10mm, particularly preferably 0.5 to 5mm.

The heat-resistant hose of the present invention is used for general hoses requiring heat resistance, and is preferably used as fuel hoses of new diesel engines (in accordance with controlling of diesel emissions from automobiles) or DPF hoses. Further, the heat-resistant hoses of the present invention are preferably used as hoses for transporting other fuels such as gasoline, alcohol-containing gasoline (gasohole), alcohol, hydrogen, LPG (liquefied Petroleum Gas) and CNG (Compressed Natural Gas), and also as automotive air hoses such as an air hose for use in a supercharger, through which high-temperature air flows.

Next, an explanation will be given to Examples of the present invention and Comparative Examples.

Examples 1 to 5, Comparative Examples 1 to 5

First, 100 parts of a vinylidene fluoride-hexafluoropropylene-tetrafluoroethylene terpolymer (DAI-EL G555 available from DAIKIN INDUSTRIES, LTD. of Osaka, Japan), 13 parts of SRF (Super Reinforcing Furnace) carbon black, 3 parts of MgO #150 and 6 parts of Ca(OH)$_2$ were prepared, and then kneaded by means of a 5-liter kneader for preparation of a fluorine-containing rubber composition for forming an inner layer.

Then, the following materials were prepared and each material was blended as shown in the following Tables 1 and 2, and then the resulting blend was kneaded by means of a 5-liter kneader for preparation of an acrylic rubber composition for forming an outer layer. Further, 100 parts of epichlorohydrin rubber (ECO), 75 parts of SRF (Super Reinforcing Furnace) carbon black, 5 parts of dioctyl phthalate (DOP) as a plasticizer, 1 part of nickel dibutyldithiocarbamate (NBC) as an antioxidant, 2 parts of MgO #150, 3 parts of hydrotalcite compounds, 1 part of a 1,8-diazabicyclo [5.4.0]undec-7-ene (DBU) salt and 2 parts of a 2,3-dimethylcapto quinoxaline derivative as a vulcanizing agent were kneaded by means of a kneader for preparation of a rubber composition for forming an outer layer of Comparative Example 5.

Acrylic elastomer (component A)

ACM (DENKA ER-5300P available from DENKI KAGAKU KOGYO KABUSHIKI KAISHA of Tokyo, Japan

Stearic acid

LUNAC S-30 available from Kao Corporation of Tokyo, Japan

Antioxidant

Naugard 445 available from Uniroyal Chemical Company of Connecticut, USA

MAF (Medium Abrasion Furnace) carbon black

SEAST G116 available from Tokai Carbon Co., Ltd. of Tokyo, Japan

Plasticizer

Adecacizer RS735 available from ASAHI DENKA CO., LTD. of Tokyo, Japan

Process aid

EMASTER 510P available from Riken Vitamin Co., Ltd. of Tokyo, Japan

Amine vulcanizing agent

1,2-dimethyl imidazole available from Shikoku Corporation of Kagawa, Japan

Vulcanizing accelerator

Trimethylthiourea (NOCCELER TMU available from OUCHISHINKO CHEMICAL INDUSTRIAL CO., LTD. of Tokyo, Japan)

Peroxide crosslinking agent (component B)

n-butyl-4,4-bis(t-butylperoxy)valerate (PERHEXA V available from NOF Corporation of Tokyo, Japan)

Co-crosslinking agent

Triaryl isocyanurate (TAIC available from Nippon Kasei Chemical of Tokyo, Japan)

Acid receiver (i) (component D)

MgO

Acid receiver (ii) (Component D)

CaO

Acid receiver (iii) (Component D)

ZnO

Acid receiver (iv) (Component D)

$$Mg_{4.5}Al(OH)_{13}CO_3 \cdot 3.5H_2O$$

Acid reveiver (v) (Component D)

$$Ca(OH)_2$$

Phenothiazine (Component C)

Phenothiazine available from Seiko Chemical Co., Ltd. of Tokyo, Japan

TABLE 1

|  | | | | | (Parts) |
|---|---|---|---|---|---|
|  | Example | | | | |
|  | 1 | 2 | 3 | 4 | 5 |
| Acrylic elastomer | 100 | 100 | 100 | 100 | 100 |
| Stearic acid | 1 | 1 | 1 | 1 | 1 |
| Antioxidant | 2 | 2 | 2 | 2 | 2 |
| MAF carbon black | 50 | 50 | 50 | 50 | 50 |
| Plasticizer | 3 | 3 | 3 | 3 | 3 |
| Process aid | 1 | 1 | 1 | 1 | 1 |
| Amine vulcanizing agent | - | - | - | - | - |
| Vulcanizing accelerator | 0.5 | 0.5 | 0.5 | 0.5 | 0.5 |
| Peroxide crosslinking agent | 3 | 3 | 3 | 3 | 3 |
| Co-crosslinking agent | 4 | 4 | 4 | 4 | 4 |
| Acid receiver (i) | 5 | - | - | - | - |
| Acid receiver (ii) | - | 5 | - | - | - |
| Acid receiver (iii) | - | - | 5 | - | - |
| Acid receiver (iv) | - | - | - | 5 | - |
| Acid receiver (v) | - | - | - | - | 5 |

TABLE 1   (continued)

|  | | (Parts) | | |
|---|---|---|---|---|
|  | Example | | | | |
|  | 1 | 2 | 3 | 4 | 5 |
| Phenothiazine | 0.5 | 0.5 | 0.5 | 0.5 | 0.5 |

TABLE 2

|  | (Parts) | | | |
|---|---|---|---|---|
|  | Comparative Example | | | |
|  | 1 | 2 | 3 | 4 |
| Acrylic elastomer | 100 | 100 | 100 | 100 |
| Stearic acid | 1 | 1 | 1 | 1 |
| Antioxidant | 2 | 2 | 2 | 2 |
| MAF carbon black | 50 | 50 | 50 | 50 |
| Plasticizer | 3 | 3 | 3 | 3 |
| Process aid | 1 | 1 | 1 | 1 |
| Amine vulcanizing agent | 4 | - | - | - |
| Vulcanizing accelerator | - | 0.5 | 0.5 | 0.5 |
| Peroxide crosslinking agent | - | 3 | 3 | 3 |
| Co-crosslinking agent | - | 4 | 4 | 4 |
| Acid receiver (i) | - | - | - | 5 |
| Acid receiver (ii) | - | - | - | - |
| Acid receiver (iii) | - | - | - | - |
| Acid receiver (iv) | - | - | - | - |
| Acid receiver (v) | - | - | - | - |
| Phenothiazine | - | - | 0.5 | - |

Heat-resistant hoses, as shown in Fig. 1, each having a fluorine-containing rubber layer and an acrylic rubber layer formed onto an outer peripheral surface of the fluorine-containing rubber layer were produced by co-extruding the thus preliminarily prepared materials as described above (each of the fluorine-containing rubber composition and the acrylic rubber composition) for forming each layer onto a mandrel, vulcanizing the thus obtained mold at 160°C for 30 minutes by means of steam, secondarily vulcanizing the thus vulcanized mold at 160°C for 4 hours by means of an oven in such a manner that the fluorine-containing rubber layer had a thickness of 2mm, the acrylic rubber layer had a thickness of 2mm, the inner diameter was 30mm and the outer diameter was 40mm.

The properties of each of the heat-resistant hoses (or the composition for forming the hose) produced in accordance with the Examples and the Comparative Examples were evaluated in the following manners. The results of the evaluations are shown in the following Tables 3 and 4.

Ordinary physical properties

Vulcanized sheets were each produced by press-vulcanizing the thus preliminarily prepared compositions for forming the outer layers of the hoses in accordance with the Examples and the Comparative Examples as described above (acrylic rubber compositions except for Comparative Example 5) at 160°C for 45 minutes, secondarily vulcanizing the thus vulcanized mold at 160°C for 4 hours by means of an oven, and forming the thus obtained mold into a sheet of 2mm thickness. Ordinary physical properties (TB, EB and HA) were evaluated in accordance with Japanese Industrial Standards (JIS) K6251 and K6253.

TB: tensile strength at break (MPa)
EB: elongation at break (%)
HA: hardness

Heat resistance

The vulcanized sheets used for the above evaluation were each allowed to stand at a high-temperature atmosphere of 175°C (150°C for Comparative Example 5) for 72 hours. Thereafter, the properties (TB, EB and HA) of the thus treated sheets were measured in the manner as described above. The change rate of each of the physical properties (ΔTB, ΔEB and ΔHA; change from the initial value) was calculated.

Interlaminar adhesion

A cut of 25.4mm in width and 3mm in thickness (inner layer: 1.5mm thickness, outer layer: 1.5mm thickness) was made in a stripe shape along a circumferential direction of the heat-resistance hose. Each strip was peeled off from the distal end of the outer layer at a rate of 50mm per minute by means of a tensile tester in accordance with Japanese Industrial Standards (JIS) B 7721. At that time, the interlaminar adhesion (N/cm) was measured. The interlaminar adhesion was measured at ordinary conditions and after thermal aging (after a thermal aging test of 175°C x 72 hours). In Tables 3 and 4, the symbol "÷" indicates that the strip was peeled off at an interface without destruction.

Cracking

Each adhesive interface after thermal aging of the above-mentioned interlaminar adhesion was observed. Whether cracking occurred was visually evaluated on the side of the inner layer (fluorine-containing layer).

Table 3

| | Example | | | | |
|---|---|---|---|---|---|
| | 1 | 2 | 3 | 4 | 5 |
| Ordinary physical properties | | | | | |
| TB (MPa) | 9.4 | 6.7 | 9.0 | 8.3 | 6.2 |
| EB (%) | 460 | 450 | 450 | 450 | 490 |
| HA (DuroA) | 72 | 74 | 75 | 71 | 73 |
| Heat resistance | | | | | |
| ΔTB (%) | +7 | +3 | ±0 | +1 | -1 |
| ΔEB (%) | -22 | -20 | -27 | -22 | -20 |
| ΔHA (DuroA) | +14 | +13 | +15 | +10 | +12 |
| Interlaminar adhesion (N/cm) | | | | | |
| Ordinary conditions | 40 | 39 | 38 | 30 | 43 |
| After thermal aging | 33 | 31 | 32 | 18 | 32 |
| Cracking | No | No | No | No | No |

Table 4

| | Comparative Example | | | | |
|---|---|---|---|---|---|
| | 1 | 2 | 3 | 4 | 5 |
| Ordinary physical properties | | | | | |
| TB (MPa) | 9.1 | 7.5 | 7.7 | 8.0 | 10.6 |
| EB (%) | 320 | 600 | 650 | 580 | 330 |
| HA (DuroA) | 60 | 63 | 63 | 70 | 70 |

Table 4   (continued)

| | Comparative Example | | | | |
|---|---|---|---|---|---|
| | 1 | 2 | 3 | 4 | 5 |
| Heat resistance | | | | | |
| ΔTB (%) | +3 | ±0 | -3 | -5 | -1 |
| ΔEB (%) | -25 | -30 | -26 | -29 | -42 |
| ΔHA (DuroA) | +14 | +13 | +14 | +12 | +12 |
| Interlaminar adhesion (N/cm) | | | | | |
| Ordinary conditions | 29 | - | - | - | 43 |
| After thermal aging | 26 | - | - | - | - |
| Cracking | Yes | No | No | No | Yes |

As can be understood from the results shown in the Tables 3 and 4, each sheet of Examples was excellent in heat resistance and interlaminar adhesion.

On the other hand, in the sheet of Comparative Example 1, the fluorine-containing rubber layer was deteriorated near to the interface and cracking occurred after thermal aging because the acrylic rubber layer thereof was formed by amine vulcanization. Similarly, in the sheet of Comparative Example 5, cracking occurred and the outer layer (epichlorohydrin rubber (ECO) layer) was inferior in heat resistance, and was softened and deteriorated at 175°C. Especially, the outer layer drastically deteriorated with heat at tensile strength at break (TB) . Therefore, Comparative Example 5 was not provided with performances required for the present invention. Since Comparative Example 3 did not contain an acid receiver in its material for forming an acrylic rubber layer, it was found that interface exfoliation occurred due to blowing gas from the fluorine-containing rubber layer. Since Comparative Example 4 did not contain phenothiazine in its material for forming an acrylic rubber layer, it was found that the vulcanizing rate of the acrylic rubber layer was too fast so that interface exfoliation occurred.

**Claims**

1.   A heat-resistant hose having a laminar structure of an inner layer formed by fluorine-containing rubber and an acrylic rubber layer formed on an outer peripheral surface of the inner layer, wherein the acrylic rubber layer is formed by a rubber composition comprising the following components (A) to (D):

(A) an acrylic elastomer;
(B) a peroxide crosslinking agent;
(C) phenothiazine; and
(D) an acid receiver.

2.   A heat-resistant hose as set forth in claim 1, wherein the acid receiver is one selected from the group consisting of metal oxides, metal hydroxides and hydrotalcite compounds.

Fig. 1

Fig. 2

Fig. 3

**European Patent Office**

## EUROPEAN SEARCH REPORT

Application Number

EP 05 25 1066

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 792 581 A (KONDO ET AL) 20 December 1988 (1988-12-20) * column 4, lines 17-37; claims 1,20,21,27 * | 1,2 | B32B1/08 F16L11/08 F16L11/04 |
| Y | EP 0 962 311 A (DAIKIN INDUSTRIES, LIMITED) 8 December 1999 (1999-12-08) * claims 1,6-8 * | 1 | |
| Y | DD 82 831 A (HEINRICH PYKA) 20 June 1971 (1971-06-20) * column 3, lines 50-53; claim 1 * | 2 | |
| A | DATABASE WPI Section Ch, Week 199109 Derwent Publications Ltd., London, GB; Class A14, AN 1991-061117 XP002331934 & JP 03 009344 A (ASAHI GLASS CO LTD) 17 January 1991 (1991-01-17) * abstract * | 1 | TECHNICAL FIELDS SEARCHED (Int.Cl.7) B32B F16L |

The present search report has been drawn up for all claims

| Place of search | Date of completion of the search | Examiner |
|---|---|---|
| The Hague | 14 June 2005 | Derz, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 25 1066

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2005

| Patent document cited in search report | | Publication date | Patent family member(s) | | Publication date |
|---|---|---|---|---|---|
| US 4792581 | A | 20-12-1988 | JP | 1575520 C | 24-08-1990 |
| | | | JP | 2001858 B | 16-01-1990 |
| | | | JP | 62156155 A | 11-07-1987 |
| | | | DE | 3682269 D1 | 05-12-1991 |
| | | | EP | 0230669 A2 | 05-08-1987 |
| | | | KR | 9508475 B1 | 31-07-1995 |
| EP 0962311 | A | 08-12-1999 | DE | 69828031 D1 | 13-01-2005 |
| | | | EP | 0962311 A1 | 08-12-1999 |
| | | | US | 2003049399 A1 | 13-03-2003 |
| | | | WO | 9836901 A1 | 27-08-1998 |
| | | | TW | 517001 B | 11-01-2003 |
| DD 82831 | A | | NONE | | |
| JP 3009344 | A | 17-01-1991 | JP | 2819619 B2 | 30-10-1998 |

EPO FORM P0459

For more details about this annex : see Official Journal of the European Patent Office, No. 12/82